# FASCICULE DE BREVET EUROPEEN

(11) **EP 2 934 213 B1**
(45) Date de publication et mention de la délivrance du brevet: **02.09.2020**
(21) Numéro de dépôt: 13818253.0
(22) Date de dépôt: 06.12.2013
(51) Int. Cl.: A43B 23/02, A43B 23/04

(54) **ARTICLE CHAUSSANT À STRUCTURE SIMPLIFIÉE**
SCHUHARTIKEL MIT VEREINFACHTER STRUKTUR
ARTICLE CHAUSSANT À STRUCTURE SIMPLIFIÉE

(30) Priorité: 21.12.2012 FR 1203567
(43) Date de publication de la demande: 28.10.2015
(73) Titulaire: Salomon S.A.S., 74370 Metz-Tessy (FR); Boucher, Béatrice, 74270 Chilly (FR); Gautier, Gérard, 1169 Yens (CH)
(72) Inventeur: BOUCHER, Béatrice, F-74270 Chilly (FR); GAUTIER, Gérard, CH- 1169 Yens (CH)
(86) Numéro de dépôt international: PCT/FR2013/000325
(87) Numéro de publication internationale: WO 2014/096561

(56) Documents cités:
- EP-A1- 2 805 638
- WO-A1-2012/166244
- US-A1- 2003 089 000
- US-A1- 2004 118 018
- US-A1- 2011 265 347
- US-A1- 2012 011 744
- US-A1- 2012 233 882

## Description

L'invention se rapporte à un article chaussant, tel qu'une chaussure ou tout équivalent. L'article chaussant peut être utilisé dans des domaines tels que la marche, la course sur terrain plat ou en montagne, la planche à roues, un sport de balle, le ski de fond, le surf sur neige, la raquette à neige, ou autre.

L'article chaussant doit remplir des fonctions variées, parfois antinomiques, comme assurer un maintien et/ou un serrage suffisant du pied tout en lui offrant un confort satisfaisant L'article chaussant doit aussi présenter une certaine souplesse, qualité qui consiste en une bonne aptitude à épouser certaines déformations du pied. En d'autres termes, l'article chaussant doit s'adapter au pied en lui laissant la latitude nécessaire à la marche ou à la pratique sportive en cause.

Pour ce faire il est connu de fabriquer des articles chaussants, tels que des chaussures, par association d'une tige et d'un semelage. La tige comprend généralement de nombreuses pièces, comme un quartier latéral, un quartier médial, une empeigne, une languette, un talon, un contrefort arrière, un embout de protection avant, un dispositif de serrage avec notamment des passants et un lacet, une doublure interne, voire encore d'autres pièces. De plus certaines de celles-ci peuvent comprendre plusieurs parties. Le problème principal dans une chaussure est d'assembler et de mettre dans une forme à trois dimensions des pièces découpées et assemblées à plat. La tige est associée, de manière connue, à une semelle de montage, pour délimiter un élément chaussant. Selon une première méthode, la tige est collée sur la semelle de montage par une couche de colle. La semelle de montage, appelée aussi première de montage, est relativement rigide, afin de résister au processus de montage, Le collage se fait en tirant la tige pour la plaquer sur la première de montage, sachant qu'une forme est insérée dans la tige. On appelle cela le montage traditionnel sur forme. Cette technique permet d'exercer une pression suffisante pendant le chauffage de la colle, pour obtenir l'élément chaussant. Une deuxième méthode, également connue, consiste à réaliser l'élément chaussant en solidarisant la tige à la première de montage au moyen d'une couture. On appelle cela le montage Strobel. La première de montage est ici une semelle souple, pouvant être cousue, appelée semelle Strobel. Pour chacune des première et deuxième méthodes, la première de montage fait partie du semelage. Ce dernier comprend encore des pièces externes, comme une ou plusieurs couches d'amortissement ainsi qu'une couche d'usure, prévue pour contacter le sol, qui sont fixées généralement par collage sur la première de montage et sur la tige montées sur forme. Le semelage comprend encore une ou plusieurs couches internes, disposées dans l'élément chaussant, pour exercer des fonctions de protection en termes d'hygiène, d'amortissement, de maintien de la voûte plantaire, ou autre. Au final, l'association de l'élément chaussant avec les autres pièces constitutives du semelage forme la chaussure.

On observe que, quelle que soit la méthode utilisée pour sa fabrication, une chaussure selon l'art antérieur présente certains inconvénients. Tout d'abord, la chaussure fait appel à un nombre élevé de pièces, nombre généralement compris entre quarante et soixante. Parce que le nombre de pièces constituant la chaussure est élevé, le nombre d'opérations de fabrication et le temps nécessaire pour les mener sont élevés. Il faut généralement de quarante minutes à une heure trente minutes pour fabriquer une chaussure. On peut dire que les chaussures fabriquées selon des techniques classiques sont compliquées, à la fois par le nombre de leur constituants et par le nombre d'opérations de fabrication.

Un autre inconvénient résulte de la discontinuité de structure de la chaussure, notamment au niveau de la tige. Par exemple une pièce de taille réduite superposée à une autre plus grande peut parfois modifier fortement l'aptitude à la flexion de la tige là où la petite pièce est située. Cela peut parfois gêner un utilisateur et rendre plus difficile la mise en forme, c'est-à-dire en trois dimensions, de la tige.

Un autre inconvénient provient de l'existence d'espaces libres entre le pied et la chaussure. Cela signifie qu'à certains endroits le pied n'est pas en contact avec la tige, ou avec le semelage. C'est notamment vrai au niveau de certaines portions de la jonction entre la tige et la première de montage. En conséquence on observe parfois des déplacements intempestifs entre le pied et la chaussure, déplacements qui peuvent être source de gênes ou de traumatismes. Il apparait également parfois des espaces entre le pied, la cheville ou encore le bas de jambe et la tige, au niveau de l'ouverture de chaussage. En conséquence des corps étrangers peuvent entrer de manière intempestive dans la chaussure.

Au final, on peut dire qu'une chaussure selon l'art antérieur n'assure pas toujours un maintien et/ou un serrage suffisant du pied, ou ne lui offre pas toujours un confort satisfaisant. De plus cette chaussure n'épouse pas systématiquement toutes les déformations du pied.

Par rapport à cela, l'invention a pour but général de fournir un article chaussant amélioré. Notamment l'invention veut que l'article chaussant s'adapte au pied en lui laissant la latitude nécessaire à la marche ou à une pratique sportive. Il s'agit notamment d'assurer le maintien et/ou le serrage suffisant du pied tout en lui offrant un confort satisfaisant. Il s'agit aussi pour l'article chaussant d'épouser au mieux le pied et les déformations du pied.

L'invention cherche encore à simplifier un article chaussant, tout en lui conférant les aptitudes nécessaires à la pratique envisagée. Notamment l'invention veut réduire le nombre de pièces ou d'éléments qui le constituent. L'invention vise à réduire et simplifier le nombre d'opérations de fabrication, ainsi que le temps nécessaire pour les mener.

L'invention cherche également à réduire, voire à supprimer, toute gêne à l'utilisateur.

Le document EP 2 805 638 A1 propose un article chaussant qui comprend une première enveloppe, la première enveloppe s'étendant en longueur depuis une extrémité arrière jusqu'à une extrémité avant, en largeur entre un bord latéral et un bord médial, et en hauteur depuis un fond jusqu'à une extrémité supérieure, la première enveloppe comprenant des fils liés les uns aux autres mécaniquement, une partie au moins des fils comprenant au moins un filament thermofusible.

L'article chaussant est défini par la revendication indépendante 1.

Une conséquence de cet agencement est que la première enveloppe peut être mise en forme pour présenter une géométrie très similaire à celle d'un pied, et que de ce fait elle épouse le pied de manière très homogène. Cela signifie que le pied est en contact, ou au moins très proche, de la première enveloppe. Il en résulte un maintien homogène du pied avec très peu de déplacements intempestifs entre ce dernier et la première enveloppe, voire avec aucun déplacement. Un avantage qui en découle est un confort accru de l'article chaussant selon l'invention, par rapport à une chaussure selon l'art antérieur.

Une autre conséquence de l'agencement selon l'invention est que la première enveloppe présente une continuité de structure, dans le sens ou sa surface interne et/ou sa surface externe sont, sinon totalement régulières, au moins essentiellement régulières. On verra par la suite que des propriétés physiques de la première enveloppe peuvent varier selon des zones de cette dernière, mais que la régularité des surfaces permet une variation plus progressive de certaines de ces propriétés physiques. C'est par exemple le cas pour la flexion. Il en résulte avantageusement que l'utilisateur est moins gêné, voire pas du tout.

La synthèse de cc qui précède montre que la première enveloppe maintient le pied et lui apporte un confort satisfaisant. De plus la première enveloppe est à même d'épouser les déformations du pied. Cela rend l'article chaussant confortable en toute situation, qu'elle soit statique ou dynamique.

Une conséquence encore de l'agencement selon l'invention est le nombre réduit de pièces pour fabriquer l'article chaussant. Même si, on le verra par la suite, l'article chaussant peut être muni de quelques pièces supplémentaires, La première enveloppe à elle seule est un ensemble minimaliste par rapport à un élément chaussant selon l'art antérieur. La première enveloppe de l'invention est une pièce monobloc qui remplace, à elle seule, au moins des quartiers latéral et médial, une empeigne, une languette, un contrefort arrière, une première de montage, voire d'autres pièces encore. Par corollaire l'invention réduit considérablement le nombre d'opérations de fabrication et le temps nécessaire pour les mener. Il faut en général moins de trente minutes pour fabriquer une chaussure selon l'invention. Il en résulte avantageusement que l'article chaussant selon l'invention est beaucoup plus simple, dans tous les sens du terme, qu'une chaussure selon l'art antérieur. Cependant on précise maintenant, même si cela sera vu par la suite, que la simplicité structurelle de l'invention ne réduit pas le nombre de fonctions techniques remplies par l'article chaussant, par rapport à une chaussure selon l'art antérieur. On peut même dire que, paradoxalement, la simplicité de structure est source d'améliorations techniques, en qualité et en quantité.

D'autres caractéristiques et avantages de l'invention seront mieux compris à l'aide de la description qui va suivre, en regard du dessin annexé, lequel illustre, selon des formes de réalisation non limitatives, comment l'invention peut être réalisée, et dans lequel :
- la figure 1 est une vue en perspective avant d'un article chaussant, côté dessus, selon une première forme de réalisation de l'invention,
- la figure 2 est une coupe selon II-II de la figure 1,
- la figure 3 est une vue schématique en perspective d'une ébauche utilisée pour fabriquer une première enveloppe et une deuxième enveloppe de l'article chaussant selon la figure 1,
- la figure 4 est une vue schématique relative à la constitution d'une enveloppe de l'article chaussant selon la figure 1,
- la figure 5 est une autre vue schématique relative à la constitution d'une enveloppe de l'article chaussant selon la figure 1,
- la figure 6 est une autre vue schématique relative à la constitution d'une enveloppe de l'article chaussant selon la figure 1,
- la figure 7 est une vue de côté d'un renfort destiné à être intégré à l'article chaussant selon la figure 1,
- la figure 8 est une vue en perspective qui se rapporte à la fabrication de l'article chaussant selon la figure 1,
- la figure 9 est une autre vue en perspective qui se rapporte à la fabrication de l'article chaussant selon la figure 1,
- la figure 10 est une vue schématique en perspective d'une ébauche utilisée pour fabriquer une première enveloppe, selon une deuxième forme de réalisation de l'invention,
- la figure 11 est une vue en perspective avant d'un article chaussant, côté dessus, obtenu à partir de l'ébauche de la figure 10,
- la figure 12 est une vue schématique de côté d'une ébauche, pour une troisième forme de réalisation de l'invention,
- la figure 13 est une vue schématique de côté d'une ébauche, pour une quatrième forme de réalisation de l'invention,
- la figure 14 est une vue schématique de côté d'une ébauche, pour une cinquième forme de réalisation de l'invention,
- la figure 15 est une vue schématique de côté d'une ébauche, pour une sixième forme de réalisation de l'invention,
- la figure 16 est une vue schématique de côté d'une ébauche, pour une septième forme de réalisation de l'invention.
- la figure 17 est une vue schématique d'une ébauche, pour une huitième forme de réalisation de l'invention,
- la figure 18 est une vue schématique d'une ébauche, pour une neuvième forme de réalisation de l'invention,
- la figure 19 est une vue schématique d'une ébauche, pour une dixième forme de réalisation de l'invention,
- la figure 20 est une vue schématique d'une ébauche, pour une onzième forme de réalisation de l'invention,
- la figure 21 est similaire à la figure 20,
- la figure 22 est une vue schématique d'une ébauche, pour une douzième forme de réalisation de l'invention,
- la figure 23 est une vue schématique d'une ébauche pour une treizième forme de réalisation de l'invention.

La première forme de réalisation qui va être décrite après concerne par exemple un article chaussant pour la marche ou pour la course sur terrain horizontal ou en montagne. Cependant la première forme de réalisation s'applique à d'autres domaines tels que ceux évoqués avant.

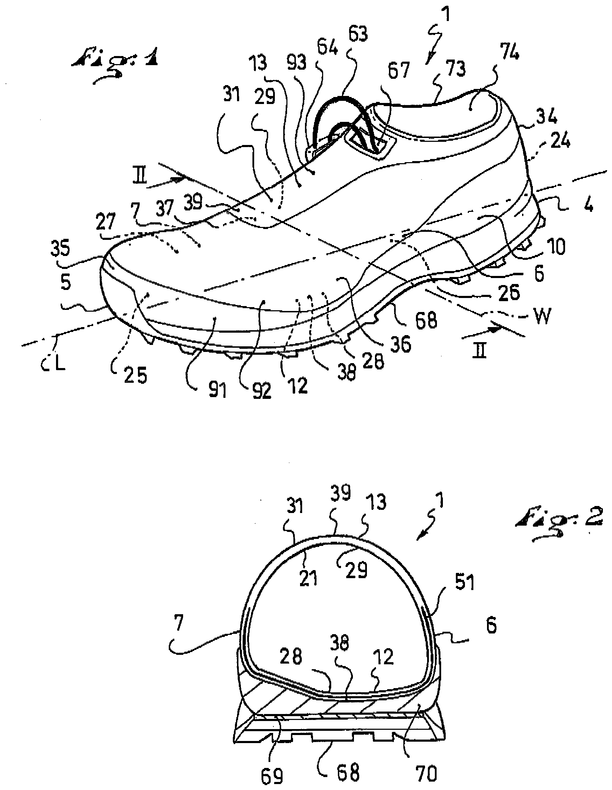

La première forme est décrite ci-après à l'aide des figures 1 à 9.

Comme le montrent les figures 1 et 2, un article chaussant 1 est prévu pour accueillir le pied de l'utilisateur. On convient pour la suite de la description de considérer que l'article chaussant 1 est une chaussure même si, on le verra bientôt en détail, sa structure est totalement inhabituelle. Ainsi, la chaussure 1 s'étend en longueur, selon une direction longitudinale L, entre une extrémité arrière ou talon 4 et une extrémité avant ou pointe 5, et en largeur, selon une direction transversale W, entre un bord latéral 6 et un bord médial 7.

Telle que représentée la chaussure 1 comprend une portion basse 10, prévue pour entourer le pied, à l'exclusion de toute portion haute. Cependant, il peut alternativement être envisagé une chaussure comprenant à la fois une portion basse et une portion haute, cette dernière étant prévue pour entourer la cheville et éventuellement le bas de jambe.

Selon la première forme de réalisation décrite, la chaussure 1 s'étend en hauteur depuis un fond 12 jusqu'à une extrémité supérieure 13, c'est-à-dire jusqu'à l'extrémité libre de la portion basse 10 ou de la chaussure 1. Le fond est une subdivision de la chaussure sur lequel le pied prend appui.

La chaussure 1 est structurée pour permettre un bon déroulement du pied pendant la marche, des transmissions d'informations sensorielles, et des impulsions pour des appuis ou des réceptions. C'est pourquoi la chaussure 1, ou article chaussant, est relativement souple.

Comme il sera détaillé après, la chaussure 1 comprend une première enveloppe 21 qui s'étend en longueur, selon la direction longitudinale L, depuis une extrémité arrière 24 jusqu'à une extrémité avant 25, en largeur, selon la direction transversale W, entre un bord latéral 26 et un bord médial 27, et en hauteur depuis un fond 28 jusqu'à une extrémité supérieure 29. Cela permet à la première enveloppe d'entourer et de maintenir le pied de l'utilisateur. Pour sa constitution, la première enveloppe comprend des fils liés les uns aux autres mécaniquement, comme il sera expliqué après. Aussi, une partie au moins des fils comprend au moins un filament thermofusible, comme il sera également expliqué après.

Selon l'invention, les fils qui comprennent au moins un filament thermofusible sont répartis sur l'intégralité de la première enveloppe 21, et la forme de la première enveloppe est figée par fusion des fils qui comprennent au moins un filament thermofusible. En fait la fusion confère à la première enveloppe 21 l'aptitude à conserver sa forme par elle-même. Cela signifie qu'elle ne s'affaisse pas si aucune force externe ne lui est appliquée, même si elle n'est pas associée à d'autres pièces. On peut dire d'une part que la première enveloppe 21 est une pièce monobloc et, d'autre part, que c'est une pièce autoporteuse. En conséquence la première enveloppe 21 donne sa forme à la chaussure 1. En d'autres termes, l'extrémité arrière 24, l'extrémité avant 25, le bord latéral 26, le bord médial 27, le fond 28 et l'extrémité supérieure 29 de la première enveloppe délimitent respectivement l'extrémité arrière 4, l'extrémité avant 5, le bord latéral 6, le bord médial 7, le fond 12 et l'extrémité supérieure 13 de l'article chaussant ou chaussure 1. La structure minimaliste adoptée pour l'enveloppe 21 est gage de simplicité, de légèreté, et de bien d'autres avantages, comme on va le voir après.

De manière non limitative, toujours selon la première forme de réalisation de l'invention, la chaussure 1 comprend aussi une deuxième enveloppe 31 qui s'étend en longueur, selon la direction longitudinale L, depuis une extrémité arrière 34 jusqu'à une extrémité avant 35, en largeur, selon la direction transversale W, entre un bord latéral 36 et un bord médial 37, et en hauteur depuis un fond 38 jusqu'à une extrémité supérieure 39. La deuxième enveloppe 31 couvre le pied elle aussi, à l'instar de la première 21. La deuxième enveloppe 31 est disposée à l'extérieur de la première 21 et, de ce fait, couvre le pied indirectement. Au final la forme de la chaussure 1 est donnée à la fois par la première enveloppe 21 et par la deuxième enveloppe 31. On verra mieux par la suite l'intérêt de faire appel à deux enveloppes.

Toujours dans l'esprit de l'invention, la deuxième enveloppe 31 comprend des fils liés les uns aux autres mécaniquement, une partie au moins des fils comprenant au moins un filament thermofusible, les fils qui comprennent au moins un filament thermofusible étant répartis sur l'intégralité de la deuxième enveloppe 31, et la forme de la deuxième enveloppe étant figée par fusion des fils qui comprennent au moins un filament thermofusible. Là encore la fusion confère à la deuxième enveloppe 31 l'aptitude à conserver sa forme par elle-même. Cela signifie qu'elle ne s'affaisse pas si aucune force externe ne lui est appliquée, même si elle n'est pas associée à d'autres pièces. On peut dire d'une part que la deuxième enveloppe 31 est une pièce monobloc et, d'autre part, que c'est une pièce autoporteuse. En conséquence la deuxième enveloppe 31 donne elle aussi sa forme à la chaussure 1. En d'autres termes, l'extrémité arrière 34, l'extrémité avant 35, le bord latéral 36, le bord médial 37, le fond 38 et l'extrémité supérieure 39 de la deuxième enveloppe 31 délimitent eux aussi respectivement l'extrémité arrière 4, l'extrémité avant 5, le bord latéral 6, le bord médial 7, le fond 12 et l'extrémité supérieure 13 de l'article chaussant ou chaussure 1. La structure minimaliste adoptée pour l'enveloppe 31 est gage de simplicité, de légèreté, et de bien d'autres avantages, comme on va le voir après.

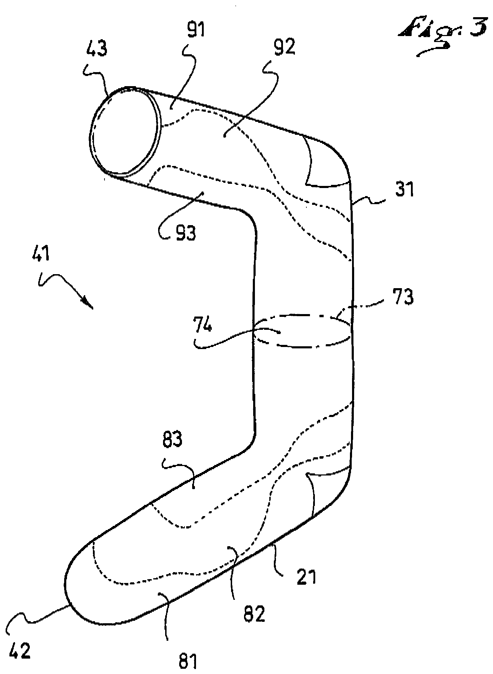

Afin de mieux mettre en lumière les spécificités de l'invention, il est utile de préciser comment sont fabriquées les enveloppes 21, 31. Cela est fait ci-après notamment à l'aide des figures 3 à 6.

Comme on le voit tout d'abord sur la figure 3, de façon schématique, l'obtention de chaque enveloppe 21, 31 se fait par fabrication d'une manche 41, c'est-à-dire en fait d'un tube souple fait de fils liés les uns aux autres mécaniquement. On peut alternativement dire qu'une enveloppe 21, 31 est une chaussette, comme on le verra par la suite sur l'ensemble des figures. La manche 41 est une ébauche pour la réalisation de l'article 1. De manière non limitative, en corrélation avec la première forme de réalisation, la manche 41 permet de réaliser à la fois la première enveloppe 21 et la deuxième enveloppe 31. La manche 41 s'étend en longueur depuis une première extrémité 42 jusqu'à une deuxième extrémité 43. La première extrémité 42 est obturée par toute technique connue de l'homme du métier, comme par exemple une couture après repli, l'ajout d'un embout fait de fils liés les uns aux autres mécaniquement, ou tout équivalent. La deuxième extrémité 43, quant à elle, est simplement une ouverture.

On observe que la manche 41 permet de fabriquer les enveloppes 21, 31 d'un seul tenant. Ici la première enveloppe 21 et la deuxième enveloppe 31 se prolongent l'une l'autre. Cela simplifie la fabrication en réduisant le nombre de pièces et le temps nécessaire à la mise en œuvre.

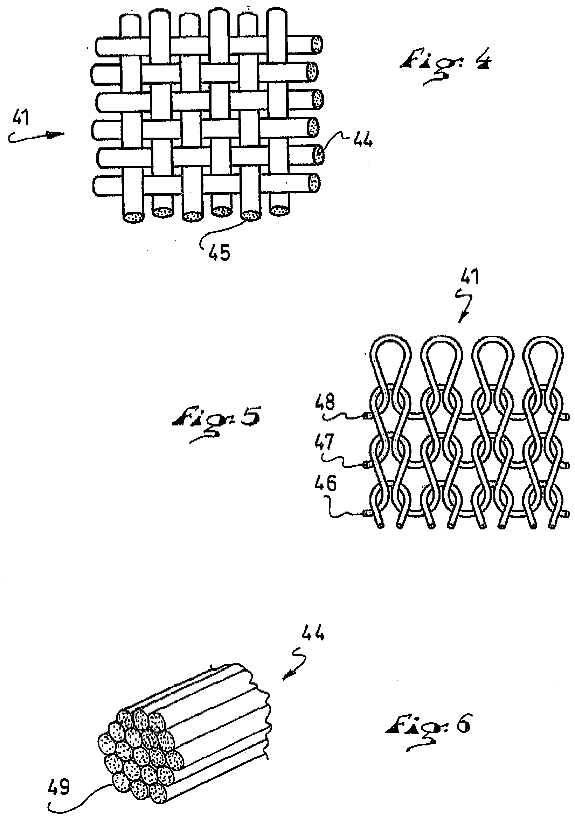

L'association des fils utilisés pour faire la manche 41, et donc les enveloppes 21, 31, est présentée à l'aide des figures 4 et 5. On prévoit de manière générale que les fils sont associés les uns aux autres par toute technique textile appropriée, comme le tricotage, le tissage, le tressage, ou autre. Dans le cas du tricotage, il est possible d'utiliser un métier circulaire à simple fonture ou à double fonture, un métier à plateau cylindre, ou un métier rectiligne. Deux zones de tricot peuvent être jointes l'une à l'autre par technique Intarsia ou par broderie. Différents motifs décoratifs peuvent être obtenus directement lors du tricotage, par la méthode Intarsia, par la broderie, la technique du Jacquard, ou autre. La figure 4 symbolise un tissage traditionnel avec des premiers fils 44 orientés selon une première direction, des deuxièmes fils 45 orientés selon une deuxième direction, les premiers 44 et deuxièmes 45 fils se croisant pour former un maillage souple. La figure 5, quant à elle, symbolise un tricotage avec ici trois fils 45, 47, 48 disposés en boucles qui s'interpénètrent. Mais, bien entendu, de nombreux autres agencements sont possibles.

La manche 41 est par exemple fabriquée avec un métier rectiligne, lequel permet de faire varier les sections, c'est-à-dire en fait le diamètre de la manche, de faire des variations de forme pour le talon, de faire des ouvertures pour le passage de lacets, de faire varier la densité de la paroi de la manche, ou encore notamment de faire varier le serrage des bouclettes. En fait le métier rectiligne offre une gamme étendue de possibilités de réglages, et il est adapté pour faire des manches de toutes les tailles, que ce soit en diamètre ou en longueur. A ce titre, le métier rectiligne est plus pratique que le métier circulaire. En effet, ce dernier travaille sur une plage réduite au niveau du diamètre de la manche. Il est donc nécessaire d'utiliser plusieurs métiers circulaires différents pour faire une gamme complète de manches 41, c'est-à-dire une gamme complète de chaussures où toutes les pointures sont représentées là où un seul métier rectiligne suffit. Au final un métier rectiligne permet de faire une ou plusieurs enveloppes en trois dimensions, avec toutes les caractéristiques voulues, et à la pointure voulue.

Il est également utile de rappeler ce qu'est un fil au sens de l'invention.

Tout d'abord le fil peut être un monofilament, obtenu par exemple par extrusion d'une matière synthétique thermofusible, telle qu'un polyamide, un polyuréthane, un polyéthylène, ou tout matériau équivalent ou similaire, La production d'un filament se fait en continu, de façon comparable au filament de soie produit par une araignée. On précise au passage que le filament peut être mono-composant, ou mono-matière, dans le sens ou sa section transversale est régulière. Mais le filament peut aussi être multi-composant, par exemple bi-composant. Dans ce dernier cas, une section transversale d'un filament montre un cœur constitué d'une première matière, et une enveloppe périphérique qui entoure le cœur, enveloppe constituée d'une deuxième matière. Chaque matière peut être thermofusible, ou bien une seule peut l'être. Si les deux matières le sont, leurs températures de fusion sont différentes.

Ensuite le fil peut être multi-filament. Il est dans ce cas obtenu par association de plusieurs filaments. Une telle association est représentée par le schéma de la figure 6. Ici tous les filaments 49 sont de même nature, dans le sens où chacun d'eux présente le même point de fusion. Mais on peut prévoir des combinaisons de filaments de différente nature, dont certains peuvent être fusibles et d'autres non, ou encore avec différents points de fusion. Les filaments sont associés les uns aux autres par toute technique connue.

Encore, le fil peut être réalisé sous la forme d'un filet de fibres. Ici une fibre est un filament de longueur limitée. Les fibres sont associées par contact serré pour former le filet, par toute technique connue et notamment par torsion. Le maintien des fibres les unes aux autres se fait traditionnellement par frottement, notamment avec les fibres naturelles comme le coton. Cependant, pour l'invention, le maintien des fibres les unes aux autres se fait soit par frottement, soit par combinaison de frottement et d'adhérence par fusion, soit encore totalement par adhérence, car l'invention fait appel à des matières thermofusibles.

Ayant présenté de manière générale la structure de la manche 41, il va être possible d'expliquer son utilisation pour la fabrication de la chaussure 1. Cependant au préalable, pour rester dans l'esprit de la première forme de réalisation, il est utile d'expliquer que l'article chaussant 1, ou chaussure, comprend un renfort 51. On verra mieux après que ce renfort est associé aux enveloppes 21, 31 par emboîtement au moment de la fabrication de la chaussure 1, pour donner à celle-ci des aptitudes spécifiques.

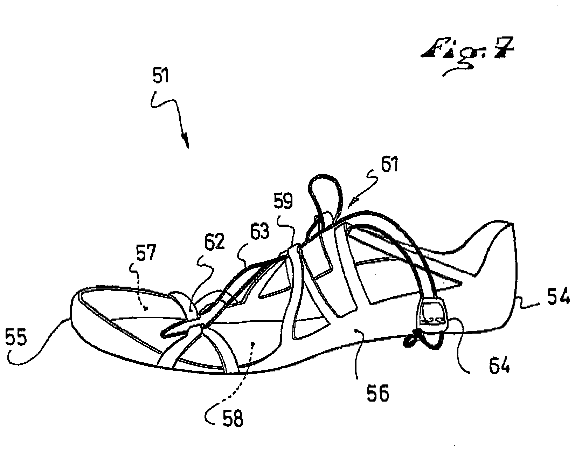

Comme le montre la figure 7, le renfort 51 est une pièce qui s'étend en longueur depuis une extrémité arrière 54 jusqu'à une extrémité avant 55, en largeur entre un bord latéral 56 et un bord médial 57, et en hauteur depuis un fond 58 jusqu'à une extrémité supérieure 59. Le renfort 51 présente une longueur et une largeur semblables aux longueurs et largeurs des enveloppes 21, 31. Plus précisément le renfort 51 s'étend, en rapport avec la première enveloppe 21, en longueur depuis l'extrémité arrière 24 jusqu'à l'extrémité avant 25, en largeur entre le bord latéral 26 et le bord médial 27, ainsi qu'en hauteur depuis le fond 28 vers l'extrémité supérieure 29. Cela permet, par définition, de renforcer la première enveloppe 21, et donc l'article chaussant 1, notamment au niveau du fond 12 et à la périphérie du fond.

De manière non obligatoire, le renfort 51 porte un dispositif de serrage 61. Celui-ci comprend par exemple des passants 62, situés au niveau de l'extrémité supérieure 59, ainsi qu'un lacet 63 et un dispositif de blocage 64, connus de l'homme du métier. Il est donc possible de serrer ou de desserrer le renfort 51 et, ce faisant, de serrer ou de desserrer la chaussure 1, comme il apparaitra mieux après.

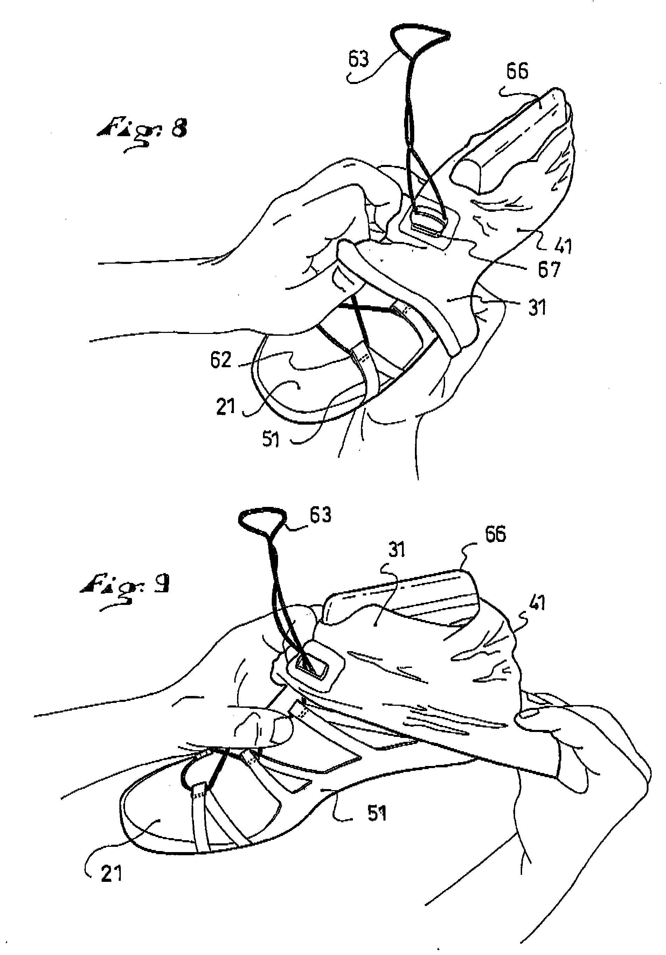

Nous pouvons maintenant aborder l'utilisation de la manche 41 pour la fabrication de la chaussure 1, selon les figures 8 et 9. En fait les constituants de la chaussure 1 sont assemblés à la main, sans machine complexe et coûteuse comme c'était le cas pour l'art antérieur.

Avec les figures 8 et 9 on comprend que la manche 41 est enfilée sur une pièce 66, appelée forme, laquelle est à l'image du pied de l'utilisateur. La manche est appliquée sur la forme 66 à la manière d'une chaussette sur un pied. La manche 41 est conformée par la forme 66 grâce à son élasticité, laquelle est due à sa constitution textile. L'élasticité qui permet de conformer la manche 41 est due à une déformation élastique réversible des mailles constitutives de la manche. Ensuite le renfort 51 est emboîté sur la subdivision de la manche 41 qui va devenir la première enveloppe 21. Puis la subdivision de la manche 41 qui va devenir la deuxième enveloppe 31 est rabattue sur le renfort 51, couvrant de ce fait ce dernier ainsi que la subdivision attribuée à la première enveloppe. Cela suffit pour constituer le sous-ensemble de la chaussure 1 qui enveloppe le pied, sous-ensemble qui au final comprend la première enveloppe 21, le renfort 51, et la deuxième enveloppe 22. On remarque au passage que la deuxième enveloppe 31 présente un orifice 67 pour le passage du lacet 63. Il suffit alors de soumettre le sous-ensemble à une élévation de température, par toute technique appropriée, pour faire fondre juste au niveau nécessaire les filaments thermofusibles des enveloppes, et ainsi donner à la chaussure 1 sa géométrie. Après chauffage, la forme 66 peut être retirée du sous-ensemble. La chaussure 1 est alors presque terminée. Il suffit, selon la première forme de réalisation, de lui ajouter un semelage externe 68. Comme on le voit sur les figures 1 et 2 l'article chaussant 1, ou chaussure, comprend un semelage externe 68. Ce dernier est destiné à prendre appui sur le sol et, de ce fait, est structuré pour résister à l'usure par frottement et aussi pour amortir des chocs. Il comprend donc, à titre d'exemple, une couche d'usure 69 et une couche d'amortissement 70. Sur la figure 2, qui est une coupe transversale dans la région de la chaussure destinée à accueillir la voûte plantaire du pied, on constate que le fond 12 présente une géométrie non plane, sensiblement identique à celle de la voûte ci-avant mentionnée. La chaussure 1 selon l'invention est en effet à même, comme on l'a dit, de se conformer au pied. Il n'est donc pas nécessaire d'ajouter à la chaussure 1 une semelle interne pour reproduire la voûte plantaire, ou les autres aspects du dessous du pied. Cela simplifie donc la chaussure 1 selon l'invention par rapport à une chaussure selon l'art antérieur. Cela allège aussi la chaussure 1 et, de ce fait, réduit les inerties mécaniques. Un avantage qui en découle est l'amélioration des performances sportives. La chaussure selon l'invention convient par exemple très bien à un coureur de fond.

La figure 2 montre aussi que le renfort 51 est situé entre la première enveloppe 21 et la deuxième enveloppe 31. Par corollaire le dispositif de serrage 61 est lui aussi, pour l'essentiel, situé entre la première enveloppe 21 et la deuxième enveloppe 31. Cela le préserve, par exemple en évitant l'accrochage du lacet 63 dans des branches lors d'une course en forêt.

Toujours en rapport avec la figure 2, mais aussi avec la figure 1, on observe que la première enveloppe 21 et la deuxième enveloppe 31 sont continues selon une section transversale. Ces enveloppes s'étendent donc de façon continue au niveau de leurs extrémités supérieures respectives 29, 39, et ainsi au niveau de l'extrémité supérieure 13 de la chaussure. Par corollaire, cette dernière est dépourvue de languette. L'enveloppement du pied est donc total et permanent.

Comme on le comprend à l'aide de la figure 1, mais aussi à l'aide de la figure 3, la frontière entre la première enveloppe 21 et la deuxième enveloppe 31 est un pli 73 qui délimite une ouverture de chaussage 74. La périphérie de l'ouverture de chaussage 74 est donc délimitée simplement par pliage des deux enveloppes 21, 31 l'une sur l'autre. Cela signifie que cette périphérie ne présente pas de couture ou de pièce rapportée, comme dans l'art antérieur, et que de ce fait la chaussure 1 n'est pas source de gêne pour l'utilisateur y compris au niveau de l'ouverture 74.

A titre d'exemple, comme on le voit sur la figure 3, la première enveloppe 21 présente trois zones 81, 82, 83 aux propriétés mécaniques différentes. Ces propriétés dépendent du pourcentage de filaments thermofusibles contenus dans les fils. On prévoit ici, de manière non limitative, une première zone 81 à forte concentration de filaments thermofusibles, par exemple entre 60 et 100%. La première zone 81 délimite le fond 28 et la périphérie du fond. On prévoit ensuite une zone intermédiaire ou deuxième zone 82 à concentration moyenne de filaments thermofusibles, par exemple entre 30 et 70%. La deuxième zone s'étend principalement au niveau des bords latéral 26 et médial 27. On prévoit enfin une troisième zone 83 à faible concentration de filaments thermofusibles, par exemple entre 5 et 40%. La troisième zone s'étend principalement au niveau de l'extrémité supérieure 29. Cet agencement rend la première enveloppe 21 relativement peu flexible vers le fond 28, mais de plus en plus flexible vers l'extrémité supérieure 29. La flexibilité, ou l'élasticité, est conditionnée par la nature des mailles de tricotage et/ou par l'élasticité du matériau constitutif des mailles. Cette élasticité permet à la première enveloppe 21 de rester au contact du pied, de la cheville ou du bas de jambe, ce qui prévient l'intrusion de corps étrangers. Un fil élastique maintenu en tension permet un bon maintien du pied.

Dans le même esprit, la deuxième enveloppe 31 présente trois zones 91, 92, 93 aux propriétés mécaniques différentes. Ces propriétés dépendent là encore du pourcentage de filaments thermofusibles contenus dans les fils. On prévoit ici, de manière non limitative, une première zone 91 à forte concentration de filaments thermofusibles, par exemple entre 60 et 100%. La première zone 91 délimite le fond 38 et la périphérie du fond. On prévoit ensuite une zone intermédiaire ou deuxième zone 92 à concentration moyenne de filaments thermofusibles, par exemple entre 30 et 70%. La deuxième zone s'étend principalement au niveau des bords latéral 36 et médial 37. On prévoit enfin une troisième zone 93 à faible concentration de filaments thermofusibles, par exemple entre 5 et 40%. La troisième zone s'étend principalement au niveau de l'extrémité supérieure 39. Cet agencement rend la deuxième enveloppe 31 relativement peu flexible vers le fond 38, mais de plus en plus flexible vers l'extrémité supérieure 39. Là encore la flexibilité vers l'extrémité supérieure permet à la deuxième enveloppe 31 de rester plaquée vers le pied, la cheville ou le bas de jambe, ce qui prévient l'intrusion de corps étrangers. Là encore une enveloppe qui comprend un fil élastique maintenu en tension permet un bon maintien du pied.

Pour chaque enveloppe 21, 31, la fusion des filaments conditionne les propriétés physiques ou mécaniques au prorata des filaments thermofusibles. Par exemple plus ceux-ci sont nombreux, en pourcentage, plus la résistance à l'abrasion augmente. A l'inverse si le pourcentage de filaments thermofusibles est réduit, l'élasticité est préservée. On observe en d'autres termes que plus le pourcentage de filaments thermofusibles est élevé, plus la résistance à l'abrasion est élevée et que, par corollaire, l'élasticité est réduite. A l'inverse si le pourcentage de filaments thermofusibles est bas, alors la résistance à l'abrasion est faible et, par corollaire, l'élasticité est importante.

Au final, lorsque les enveloppes 21, 31 sont assemblées, la chaussure 1 voit sa flexibilité augmenter verticalement depuis le fond 12 vers l'extrémité supérieure 13. Cela lui donne d'une part la capacité à soutenir le pied et, d'autre part, l'aptitude à s'évaser de manière réversible au niveau de l'extrémité supérieure 13 pour faciliter un chaussage ou un déchaussage.

Il faut garder à l'esprit cependant que les agencements des enveloppes donnés ci-dessus ne sont pas limitatifs. En particulier il est possible de conférer à chaque enveloppe les propriétés voulues, comme l'élasticité, l'étanchéité, la résistance à l'usure, des propriétés fongicides, un aspect esthétique souhaité, ou autre.

Selon la première forme de réalisation toujours, l'épaisseur de la première enveloppe 21 est inférieure ou égale à 5mm, sachant que des valeurs inférieures ou égales à 3mm ont donné de bons résultats. Cela rend la première enveloppe 21 légère.

Dans le même esprit, l'épaisseur de la deuxième enveloppe 31 est inférieure ou égale à 5mm, sachant que des valeurs inférieures ou égales à 3mm ont donné de bons résultats. Cela rend la deuxième enveloppe 31 légère.

Pour chaque enveloppe 21, 31, l'épaisseur est mesurée après fusion des fils qui comprennent au moins un filament thermofusible.

Au final, c'est la chaussure 1 selon l'invention qui est plus légère qu'une chaussure selon l'art antérieur, à caractéristiques techniques comparables.

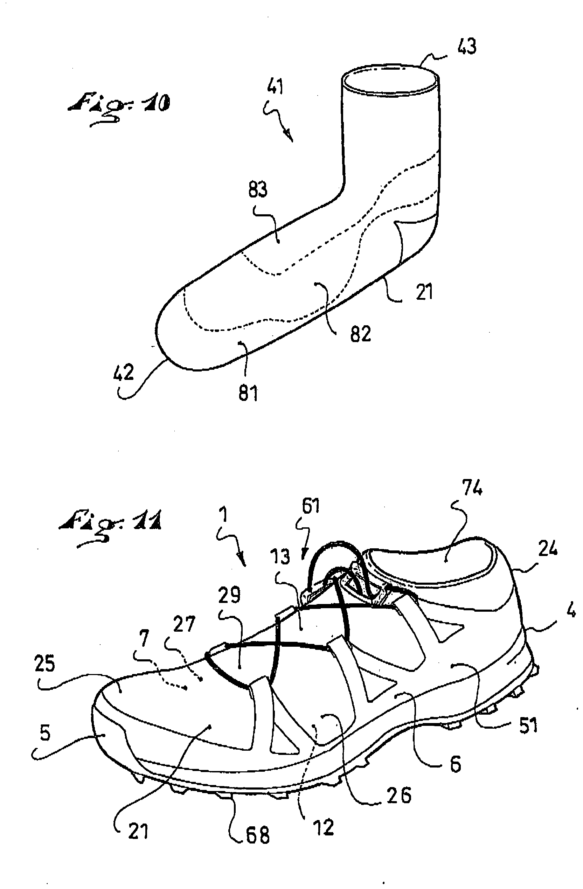

Les autres formes de réalisation de l'invention sont présentées ci-après sommairement à l'aide des figures 10 à 23. Pour des raisons de commodité, ce sont surtout les différences par rapport à la première forme de réalisation qui sont mises en évidence. De plus, il est prévu d'utiliser les mêmes références pour des éléments identiques ou similaires vus dans la première forme.

Ainsi pour la deuxième forme, selon les figures 10 et 11, on retrouve un article chaussant ou chaussure 1, avec ses extrémités arrière 4 et avant 5, ses bords latéral 6 et médial 7, ou encore son fond 12 et son extrémité supérieure 13.

Ce qui est spécifique à la deuxième forme de réalisation, c'est la structure de l'ébauche ou manche 41. Celle-ci s'étend bien entre une première extrémité 42, par exemple fermée, et une deuxième extrémité 43 ouverte. Cependant, la manche 41 est dimensionnée pour obtenir la première enveloppe 21 uniquement, à l'exclusion de toute autre enveloppe ou subdivision d'enveloppe. En conséquence, c'est l'extrémité ouverte 43 de la première enveloppe 21 qui délimite à elle seule l'ouverture de chaussage 74. La chaussure 1 selon la deuxième forme de réalisation comprend donc la première enveloppe 21 et le renfort 51, avec son dispositif de serrage 61, à l'exclusion de toute enveloppe supplémentaire. On peut dire aussi que le renfort 51 couvre la première enveloppe 21. Cela signifie que la chaussure 1 est encore plus légère, par rapport à la chaussure selon la première forme de réalisation. Il est aussi prévu un semelage externe 68, pour la chaussure selon la deuxième forme, bien que cela ne soit pas obligatoire.

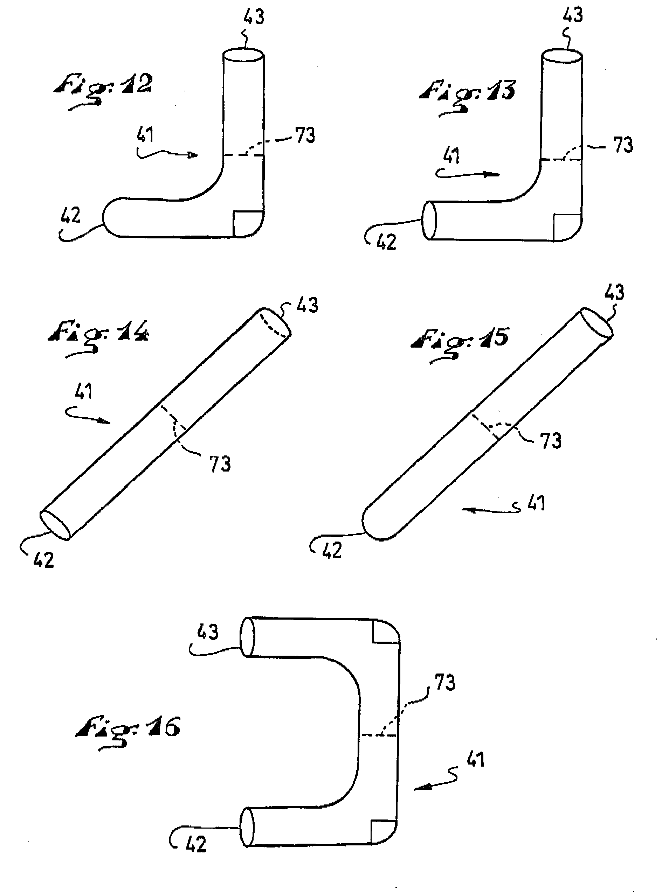

Pour la troisième forme de réalisation, selon la figure 12, la manche 41, qui s'étend entre une première extrémité fermée 42 et une deuxième extrémité ouverte 43, sert à obtenir deux enveloppes 21, 31. La partie de la manche pour la première enveloppe 21 est coudée, tandis que la partie de la manche pour la deuxième enveloppe est droite.

Pour la quatrième forme de réalisation, selon la figure 13, la manche 41, qui s'étend entre une première extrémité ouverte 42 et une deuxième extrémité ouverte 43, sert à obtenir deux enveloppes 21, 31. Là encore la partie de la manche pour la première enveloppe 21 est coudée, tandis que la partie de la manche pour la deuxième enveloppe est droite.

Pour la cinquième forme de réalisation, selon la figure 14, la manche 41 qui sert à obtenir deux enveloppes 21, 31 est droite, et ouverte à chaque extrémité 42, 43.

Pour la sixième forme de réalisation, selon la figure 15, la manche 41 qui sert à obtenir deux enveloppes 21, 31 est droite, fermée à la première extrémité 42 et ouverte à la deuxième extrémité 43.

Pour la septième forme de réalisation, selon la figure 16, la manche 41, qui s'étend entre une première extrémité ouverte 42 et une deuxième extrémité ouverte 43, sert encore à obtenir deux enveloppes 21, 31. La partie de la manche pour la première enveloppe 21 est coudée, et la partie de la manche pour la deuxième enveloppe 31 est également coudée.

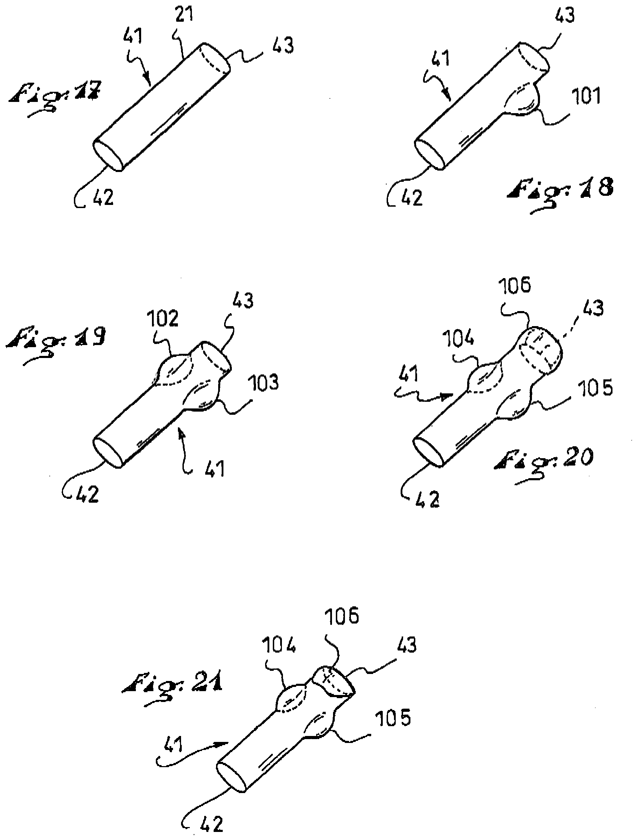

Pour la huitième forme de réalisation, selon la figure 17, la manche 41, qui s'étend entre une première extrémité ouverte 42 et une deuxième extrémité ouverte 43, sert à obtenir une seule enveloppe 21. On observe que dans ce cas la manche 41 est droite. Mais là encore, il peut être prévu d'obturer la première extrémité 42 par toute technique connue de l'homme du métier.

Pour la neuvième forme de réalisation, selon la figure 18, la manche 41 s'étend encore entre une première extrémité 42 et une deuxième extrémité 43. Ce qui est spécifique à cette forme de réalisation, c'est que la manche 41 présente une protubérance 101. Celle-ci est située entre les extrémités et est obtenue, de manière connue, par exemple en augmentant localement la quantité de boucles ou de mailles faites par tricotage. La protubérance 101 délimite une cavité qui débouche dans la manche 41. La protubérance peut servir par exemple à loger le talon du pied de l'utilisateur dans la chaussure finie.

Pour la dixième forme de réalisation, selon la figure 19, la manche 41 s'étend toujours entre une première extrémité 42 et une deuxième extrémité 43. Ce qui est spécifique à cette forme de réalisation, c'est que la manche 41 présente deux protubérances 102, 103. Celles-ci sont situées entre les extrémités, et délimitent chacune une cavité qui débouche dans la manche 41. Ici les protubérances sont situées chacune à une même distance d'une extrémité 42, 43, et servent par exemple à loger les reliefs de l'articulation de la cheville de l'utilisateur dans la chaussure finie.

Pour la onzième forme de réalisation, selon les figures 20, 21, la manche 41 s'étend à nouveau entre une première extrémité 42 et une deuxième extrémité 43. Ce qui est spécifique à cette forme de réalisation, c'est que la manche 41 présente trois protubérances 104, 105, 106. Deux 104, 105 d'entre-elles sont disposées entre les extrémités, et délimitent chacune une cavité qui débouche dans la manche 41. Ces deux protubérances 104, 105 sont situées chacune à une même distance d'une extrémité 42, 43, et servent par exemple à loger les parties saillantes de la cheville de l'utilisateur dans la chaussure finie. La troisième protubérance 106, quant à elle, est située au niveau d'une extrémité 43. Cette protubérance est par exemple repliée contre la manche 41 pour former une poche de rangement. La poche accueille par exemple un dispositif de blocage de lacet, non représenté ici mais bien connu de l'homme du métier.

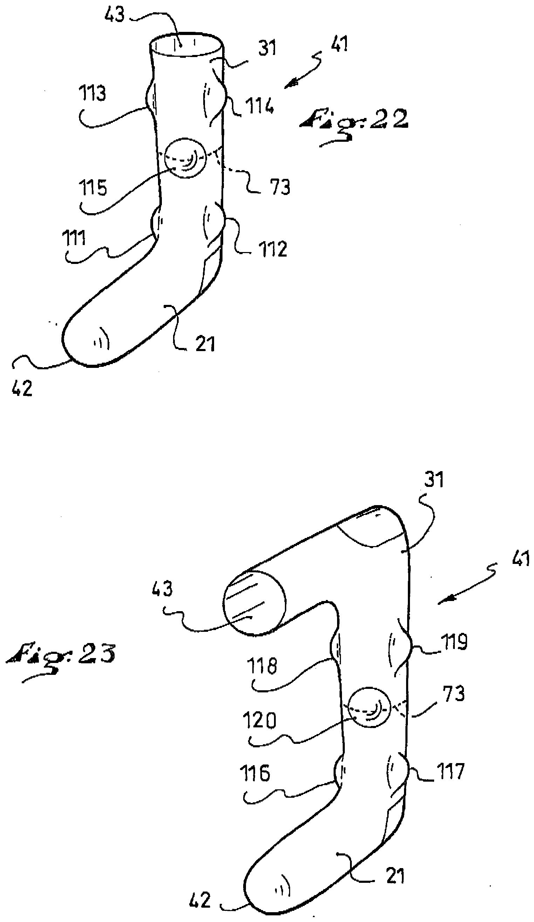

Pour la douzième forme de réalisation, selon la figure 22, la manche 41 s'étend entre une première extrémité 42 fermée et une deuxième extrémité 43 ouverte. Ici la manche 41 permet de réaliser à la fois la première enveloppe coudée 21 et la deuxième enveloppe droite 31, la limite entre les deux étant un pli 73 comme on l'a vu au préalable. Ce qui est spécifique à cette forme de réalisation, c'est que la manche 41 présente cinq protubérances 111, 112, 113, 114 et 115. Deux 111, 112 d'entre-elles sont disposées au niveau de la première enveloppe 21, pour loger les parties saillantes de la cheville de l'utilisateur dans la chaussure finie. Deux autres protubérances 113, 114 sont disposées au niveau de la deuxième enveloppe 31, elles aussi pour loger les parties saillantes de la cheville. Au final, dans la chaussure finie, les protubérances 111, 112 de la première enveloppe 21 sont logées dans les protubérances 113, 114 de la deuxième enveloppe 31. On observe en outre que la manche 41 présente une cinquième protubérance 115 au niveau de la limite 73 entre les enveloppes 21, 31. Cette protubérance 115 a vocation à former une partie saillante de la chaussure finie, telle qu'une poche ou un organe de préhension.

Enfin pour la treizième forme de réalisation, selon la figure 23, la manche 41 s'étend entre une première extrémité 42 fermée et une deuxième extrémité 43 ouverte. Ce qui différencie cette forme de réalisation de la précédente, c'est que la première enveloppe 21 est coudée, et que la deuxième enveloppe 31 est elle aussi coudée. Pour le reste, la manche 41 selon la treizième forme de réalisation présente de manière non limitative cinq protubérances 116, 117, 118, 119 et 120, respectivement similaires aux protubérances 111, 112, 113, 114 et 115 de la manche 41 selon la douzième forme de réalisation.

Dans tous les cas l'invention est réalisée à partir de matériaux connus de l'homme du métier. Par exemple une enveloppe 21, 31 comprend un copolymère. L'invention fait aussi appel à certaines techniques connues, notamment pour la préparation de la manche 41 ou du semelage externe 68.

L'invention n'est pas limitée aux formes de réalisation ci-avant décrites, et comprend tous les équivalents techniques pouvant entrer dans la portée des revendications qui vont suivre.

En particulier il peut être prévu d'ajouter encore une ou plusieurs enveloppes à l'article chaussant 1.

Il peut être prévu que le renfort soit situé à l'extérieur de l'article chaussant, en couvrant de fait toutes les enveloppes, directement ou indirectement.

Il peut être prévu un nombre différent de trois pour les zones des enveloppes aux propriétés mécaniques ou physiques différentes. Par exemple une, deux, quatre, cinq, ou plus.

Il est également possible d'inclure des filaments ou des fils de colle dans la structure de la manche 41, et donc dans chaque enveloppe 21, 31. La colle agit par fusion par exemple pour solidariser les enveloppes entre-elles, pour solidariser le renfort 51 à une enveloppe, pour éventuellement solidariser une doublure interne à la première enveloppe 21, ou une couche de protection externe à la deuxième enveloppe 31 ou à la première enveloppe 21. Au final, dans ce cas, une enveloppe 21, 31 au moins comprend des filaments ou des fils de colle thermofusible.

En ce qui concerne les protubérances, leur nombre n'est pas limité. Il peut n'y en avoir aucune, mais il peut aussi y en avoir une, deux, trois, quatre, cinq, et pourquoi pas plus. Une protubérance peut dans certains cas jouer le rôle d'un organe de préhension, par exemple pour aider à chausser.

Une protubérance peut faire saillie en dehors de la manche, ou au contraire s'enfoncer dans la manche. Une protubérance est donc un relief, tel qu'une saillie, obtenu par un tissage non uniforme de la manche.

En ce qui concerne l'aspect esthétique de l'article chaussant, les fils choisis pour fabriquer les enveloppes peuvent être choisis de différentes couleurs, ou comprendre des matériaux différents.

## Revendications

1. Article chaussant (1) comprenant :
- une première enveloppe (21) s'étendant en longueur depuis une extrémité arrière (24) jusqu'à une extrémité avant (25), en largeur entre un bord latéral (26) et un bord médial (27), et en hauteur depuis un fond (28) jusqu'à une extrémité supérieure (29), la première enveloppe (21) comprenant des fils (44, 45, 46, 47, 48) liés les uns aux autres mécaniquement,
- une deuxième enveloppe (31) s'étendant en longueur depuis une extrémité arrière (34) jusqu'à une extrémité avant (35), en largeur entre un bord latéral (36) et un bord médial (37), et en hauteur depuis un fond (38) jusqu'à une extrémité supérieure (39), la deuxième enveloppe (31) comprenant des fils liés les uns aux autres mécaniquement, la deuxième enveloppe (31) étant disposé à l'extérieur de la première enveloppe (21),
- un renfort (51) situé entre la première enveloppe (21) et la deuxième enveloppe (31),
une partie au moins des fils de la première enveloppe (21) et de la deuxième enveloppe (31) comprenant au moins un filament thermofusible, les fils qui comprennent au moins un filament thermofusible étant répartis sur l'intégralité de la première enveloppe (21) et de la deuxième enveloppe et la forme de la première enveloppe (21) et la forme de la deuxième enveloppe (32) étant figées par fusion des fils qui comprennent au moins un filament thermofusible.

2. Article chaussant (1) selon la revendication 1, **caractérisé par le fait que** l'extrémité arrière (34), l'extrémité avant (35), le bord latéral (36), le bord médial (37), le fond (38) et l'extrémité supérieure (39) de la deuxième enveloppe (31) délimitent respectivement l'extrémité arrière (4), l'extrémité avant (5), le bord latéral (6), le bord médial (7), le fond (12) et l'extrémité supérieure (13) de l'article chaussant (1).

3. Article chaussant (1) selon l'une des revendications précédentes, **caractérisé par le fait que** la première enveloppe (21) et la deuxième enveloppe (31) se prolongent l'une l'autre.

4. Article chaussant (1) selon la revendication précédente, **caractérisé par le fait que** la frontière entre la première enveloppe (21) et la deuxième enveloppe (31) est un pli (73) qui délimite une ouverture de chaussage (74).

5. Article chaussant (1) selon l'une des revendications précédentes, **caractérisé par le fait que** la première enveloppe (21) présente trois zones (81, 82, 83) aux propriétés mécaniques différentes.

6. Article chaussant (1) selon l'une des revendications précédentes, **caractérisé par le fait que** la deuxième enveloppe (31) présente trois zones (91, 92, 93) aux propriétés mécaniques différentes.

7. Article chaussant (1) selon l'une des revendications précédentes, **caractérisé par le fait que** l'épaisseur de la première enveloppe (21) est inférieure ou égale à 5mm.

8. Article chaussant (1) selon l'une des revendications précédentes, **caractérisé par le fait que** l'épaisseur de la deuxième enveloppe (31) est inférieure ou égale à 5mm.

9. Article chaussant (1) selon l'une des revendications précédentes, **caractérisé par le fait que** le renfort (51) s'étend, en rapport avec la première enveloppe (21), en longueur depuis l'extrémité arrière (24) jusqu'à l'extrémité avant (25), en largeur entre le bord latéral (26) et le bord médial (27), ainsi qu'en hauteur depuis le fond (28) vers l'extrémité supérieure (29).

10. Article chaussant (1) selon l'une des revendications précédentes, **caractérisé par le fait que** le renfort (51) porte un dispositif de serrage (61).

11. Article chaussant (1) selon l'une des revendications précédentes, **caractérisé par le fait qu'**il comprend un semelage externe (68).

12. Article chaussant (1) selon l'une des revendications précédentes, **caractérisé par le fait qu'**une enveloppe (21, 31) comprend un copolymère.

13. Article chaussant (1) selon l'une des revendications précédentes, **caractérisé par le fait qu'**une enveloppe (21, 31) comprend des filaments ou des fils de colle thermofusible.

## Patentansprüche

1. Schuhartikel (1), welcher umfasst:
- eine erste Hülle (21), die sich in der Länge von einem hinteren Ende (24) bis zu einem vorderen Ende (25), in der Breite zwischen einem seitlichen Rand (26) und einem medialen Rand (27) und in der Höhe von einem Boden (28) bis zu einem oberen Ende (29) erstreckt, wobei die erste Hülle (21) Fäden (44, 45, 46, 47, 48) umfasst, die mechanisch miteinander verbunden sind,
- eine zweite Hülle (31), die sich in der Länge von einem hinteren Ende (34) bis zu einem vorderen Ende (35), in der Breite zwischen einem seitlichen Rand (36) und einem medialen Rand (37) und in der Höhe von einem Boden (38) bis zu einem oberen Ende (39) erstreckt, wobei die zweite Hülle (31) Fäden umfasst, die mechanisch miteinander verbunden sind, wobei die zweite Hülle (31) außerhalb der ersten Hülle (21) angeordnet ist,
- ein Verstärkungselement (51), das sich zwischen der ersten Hülle (21) und der zweiten Hülle (31) befindet,
wobei wenigstens ein Teil der Fäden der ersten Hülle (21) und der zweiten Hülle (31) wenigstens ein wärmeschmelzbares Filament umfasst, wobei die Fäden, welche wenigstens ein wärmeschmelzbares Filament umfassen, über die gesamte erste Hülle (21) und zweite Hülle verteilt sind und die Form der ersten Hülle (21) und die Form der zweiten Hülle (32) durch Verschmelzung der Fäden, welche wenigstens ein wärmeschmelzbares Filament umfassen, erstarrt sind.

2. Schuhartikel (1) nach Anspruch 1, **dadurch gekennzeichnet, dass** das hintere Ende (34), das vordere Ende (35), der seitliche Rand (36), der mediale Rand (37), der Boden (38) und das obere Ende (39) der zweiten Hülle (31) das hintere Ende (4), das vordere Ende (5), den seitlichen Rand (6), den medialen Rand (7), den Boden (12) bzw. das obere Ende (13) des Schuhartikels (1) begrenzen.

3. Schuhartikel (1) nach einem der vorhergehenden Ansprüche, **dadurch gekennzeichnet, dass** die erste Hülle (21) und die zweite Hülle (31) einander verlängern.

4. Schuhartikel (1) nach dem vorhergehenden Anspruch, **dadurch gekennzeichnet, dass** die Grenze zwischen der ersten Hülle (21) und der zweiten Hülle (31) eine Falte (73) ist, welche eine Schuhöffnung (74) begrenzt.

5. Schuhartikel (1) nach einem der vorhergehenden Ansprüche, **dadurch gekennzeichnet, dass** die erste Hülle (21) drei Bereiche (81, 82, 83) mit unterschiedlichen mechanischen Eigenschaften aufweist.

6. Schuhartikel (1) nach einem der vorhergehenden Ansprüche, **dadurch gekennzeichnet, dass** die zweite Hülle (31) drei Bereiche (91, 92, 93) mit unterschiedlichen mechanischen Eigenschaften aufweist.

7. Schuhartikel (1) nach einem der vorhergehenden Ansprüche, **dadurch gekennzeichnet, dass** die Dicke der ersten Hülle (21) kleiner oder gleich 5 mm ist.

8. Schuhartikel (1) nach einem der vorhergehenden Ansprüche, **dadurch gekennzeichnet, dass** die Dicke der zweiten Hülle (31) kleiner oder gleich 5 mm ist.

9. Schuhartikel (1) nach einem der vorhergehenden Ansprüche, **dadurch gekennzeichnet, dass** sich das Verstärkungselement (51), bezogen auf die erste Hülle (21), in der Länge vom hinteren Ende (24) bis zum vorderen Ende (25), in der Breite zwischen dem seitlichen Rand (26) und dem medialen Rand (27) sowie in der Höhe vom Boden (28) zum oberen Ende (29) hin erstreckt.

10. Schuhartikel (1) nach einem der vorhergehenden Ansprüche, **dadurch gekennzeichnet, dass** das Verstärkungselement (51) eine Spannvorrichtung (61) trägt.

11. Schuhartikel (1) nach einem der vorhergehenden Ansprüche, **dadurch gekennzeichnet, dass** er eine äußere Besohlung (68) umfasst.

12. Schuhartikel (1) nach einem der vorhergehenden Ansprüche, **dadurch gekennzeichnet, dass** eine Hülle (21, 31) ein Copolymer umfasst.

13. Schuhartikel (1) nach einem der vorhergehenden Ansprüche, **dadurch gekennzeichnet, dass** eine Hülle (21, 31) Filamente oder Fäden aus wärmeschmelzbarem Klebstoff umfasst.

## Claims

1. Item of footwear (1) comprising:
- a first envelope (21) extending length-wise from a rear end (24) to a front end (25), width-wise between a lateral edge (26) and a medial edge (27), and height-wise from a bottom (28) to an upper end (29), the first envelope (21) comprising mechanically interconnected threads (44, 45, 46, 47, 48),
- a second envelope (31) extending length-wise from a rear end (34) to a front end (35), width-wise between a lateral edge (36) and a medial edge (37), and height-wise from a bottom (38) to an upper end (39), the second envelope (31) comprising mechanically interconnected threads, the second envelope (31) being disposed on the outside of the first envelope (21),
- a reinforcement (51) situated between the first envelope (21) and the second envelope (31),
at least some of the threads of the first envelope (21) and of the second envelope (31) comprising at least one hot-melt filament, the threads that comprise at least one hot-melt filament being distributed throughout the first envelope (21) and the second envelope and the shape of the first envelope (21) and the shape of the second envelope (32) being fixed by melting of the threads that comprise at least one hot-melt filament.

2. Item of footwear (1) according to Claim 1, **characterized in that** the rear end (34), the front end (35), the lateral edge (36), the medial edge (37), the bottom (38) and the upper end (39) of the second envelope (31) delimit the rear end (4), the front end (5), the lateral edge (6), the medial edge (7), the bottom (12) and the upper end (13), respectively, of the item of footwear (1).

3. Item of footwear (1) according to either of the preceding claims, **characterized in that** the first envelope (21) and the second envelope (31) are in the continuation of one another.

4. Item of footwear (1) according to the preceding claim, **characterized in that** the boundary between the first envelope (21) and the second envelope (31) is a fold (73) that delimits an opening (74) for putting the item of footwear on.

5. Item of footwear (1) according to one of the preceding claims, **characterized in that** the first envelope (21) has three zones (81, 82, 83) having different mechanical properties.

6. Item of footwear (1) according to one of the preceding claims, **characterized in that** the second envelope (31) has three zones (91, 92, 93) having different mechanical properties.

7. Item of footwear (1) according to one of the preceding claims, **characterized in that** the thickness of the first envelope (21) is less than or equal to 5 mm.

8. Item of footwear (1) according to one of the preceding claims, **characterized in that** the thickness of the second envelope (31) is less than or equal to 5 mm.

9. Item of footwear (1) according to one of the preceding claims, **characterized in that** the reinforcement (51) extends, with respect to the first envelope (21), length-wise from the rear end (24) to the front end (25), width-wise between the lateral edge (26) and the medial edge (27), and height-wise from the bottom (28) to the upper edge (29) .

10. Item of footwear (1) according to one of the preceding claims, **characterized in that** the reinforcement (51) bears a tightening device (61).

11. Item of footwear (1) according to one of the preceding claims, **characterized in that** it comprises an external bottom assembly (68).

12. Item of footwear (1) according to one of the preceding claims, **characterized in that** one envelope (21, 31) comprises a copolymer.

13. Item of footwear (1) according to one of the preceding claims, **characterized in that** one envelope (21, 31) comprises filaments or threads of hot-melt adhesive.
